# EUROPÄISCHE PATENTSCHRIFT

(11) **EP 1 212 823 B1**
(45) Veröffentlichungstag und Bekanntmachung des Hinweises auf die Patenterteilung: **11.02.2009**
(21) Anmeldenummer: 00962222.6
(22) Anmeldetag: 16.08.2000
(51) Int. Cl.: H02J 13/00

(54) **VERFAHREN ZUM BETREIBEN EINES GEBÄUDE-INSTALLATIONSSYSTEMS**
METHOD FOR OPERATING A BUILDING INSTALLATION SYSTEM
PROCEDE POUR FAIRE FONCTIONNER UN SYSTEME D'INSTALLATION DE BATIMENT

(30) Priorität: 14.09.1999 DE 19944023
(43) Veröffentlichungstag der Anmeldung: 12.06.2002
(73) Patentinhaber: SIEMENS AKTIENGESELLSCHAFT, 80333 München (DE)
(72) Erfinder: GERLACH, Horst, D-93073 Neutraubling (DE)
(86) Internationale Anmeldenummer: PCT/DE2000/002770
(87) Internationale Veröffentlichungsnummer: WO 2001/020748

(56) Entgegenhaltungen:
- EP-A- 0 777 311
- EP-A- 0 833 426
- EP-A- 0 893 941
- US-A- 5 696 695

## Beschreibung

Die Erfindung betrifft ein Verfahren zum Betreiben eines Gebäude-Installationssystems, bei dem eine Anzahl von Installationsgeräten, die als Aktoren und Sensoren bezeichnet werden, über eine Kommunikationsleitung miteinander kommunizieren.

In einem solchen Gebäude-Installationssystem, insbesondere in einem Haus-Installationssystem, wird vom Sensor über die Kommunikationsleitung ein Kommunikationssignal an den Aktor übermittelt, der daraufhin eine Aktion durchführt. Der Sensor ist beispielsweise eine Bedientaste oder ein Bedienschalter, über den ein zur Betätigung eines Rolladenantriebs ausgebildeter Aktor angesteuert wird. Im einfachsten Fall weist das Installationssystem jeweils einen Sensor und einen Aktor auf. In der Regel umfasst das Installationssystem jedoch eine Vielzahl von Aktoren und Sensoren. Diese kommunizieren miteinander bevorzugt über einen Datenbus, beispielsweise den sogenannten EIB-Bus (European Installation Bus). Als Bus- oder Kommunikationsleitung wird ein Adernpaar verwendet. Aus der EP 0 833 426 A2 ist ein Installationssystem zu entnehmen, das für die Aufrüstung mit dem EIB-Bus ausgebildet ist und hierzu mehrere über einen Applikationsbaustein miteinander verknüpfte Installationsebenen aufweist.

Die Aktoren sind häufig dafür ausgelegt eine Last, beispielsweise den Motor des Rolladenantriebs, in einem Stromkreis zu schalten. Um die Kosten für eine separate elektrische Versorgung der Installationsgeräte einzusparen, entnimmt der Aktor aus dem Stromkreis Strom und stellt über die Kommunikationsleitung eine elektrische Versorgung für weitere Installationsgeräte bereit. Der Aktor ist in diesem Fall als eine dezentrale Versorgungseinheit ausgebildet. Bei der dezentralen Versorgung über die Kommunikationsleitung besteht das Problem, dass die Versorgungseinheit aufgrund ihres Innenwiderstands eine Dämpfung des Kommunikationssignals bewirkt. Sind in dem Installationssystem mehrere dezentrale Versorgungseinheiten vorgesehen, so trägt jede zur Signaldämpfung bei. Dies kann bei zuviel angeschlossenen dezentralen Versorgungseinheiten zu Signalverlusten führen. Im Regelfall wird man deshalb die maximale Anzahl der dezentralen Versorgungseinheiten beschränken. Soll das System durch zusätzliche dezentrale Versorgungseinheiten oder eine zentrale Versorgungseinheit erweitert werden, lässt sich ohne zusätzliche Maßnahmen ein Signalverlust nicht vermeiden.

Der Erfindung liegt die Aufgabe zugrunde, ein Verfahren zum Betreiben eines Gebäude-Installationssystems anzugeben, bei dem eine zuverlässige Signalübermittlung gewährleistet ist.

Die Aufgabe wird gemäß der Erfindung gelöst durch ein Verfahren gemäß Anspruch 1.

Die Reduzierung ist dabei derart, dass die Versorgung an den Versorgungsbedarf der Installationsgeräte angepasst wird. Die Reduzierung beinhaltet insbesondere auch das Abschalten der Versorgung. Dadurch wird die durch die Versorgungseinheit bedingte Dämpfung von Kommunikationssignalen möglichst gering gehalten. Es wird somit eine sichere Signalübertragung über die Kommunikationsleitung erzielt. Sind mehrere Versorgungseinheiten vorgesehen, erfolgt die Anpassung an den Versorgungsbedarf vorzugsweise über das Abschalten einer oder mehrere Versorgungseinheiten.

Die automatische und/oder ferngesteuerte Reduzierung hat im Vergleich zu einer manuellen Anpassung den wesentlichen Vorteil, dass auf die Versorgungseinheiten nicht direkt manuell zugegriffen werden muss. Bei bestehenden Hausinstallationssystemen sind die Versorgungseinheiten nämlich oftmals unzugänglich eingebaut, so dass ein manuelles Abschalten nur sehr schwer und mit großem Aufwand möglich ist.

In einer bevorzugten Ausführung wird die Versorgung über eine zentrale Einspeisestelle bereitgestellt. Dabei ist die zentrale Einspeisestelle vorzugsweise auf den Versorgungsbedarf der Installationsgeräte im Installationssystem abgestimmt, so dass neben der zentralen Einspeisestelle keine weiteren dezentralen Versorgungseinheiten notwendig sind. Diese können daher gänzlich abgeschaltet werden.

Zur ferngesteuerten Abschaltung übermittelt die zentrale Einspeisestelle an die dezentrale Versorgungseinheit bevorzugt ein Abschaltsignal. Über dieses Signal wird der Versorgungseinheit mitgeteilt, dass eine zentrale Einspeisestelle vorhanden ist, worauf die dezentrale Einspeisung abgeschaltet wird bzw. unterbleibt.

Als Abschaltsignal wird von der zentralen Einspeisestelle vorzugsweise eine höhere Versorgungsspannung als von der dezentralen Versorgungseinheit bereitgestellt.

Bei Auftreten der hohen Versorgungsspannung in der Kommunikationsleitung erkennt die Versorgungseinheit, dass eine zentrale Einspeisestelle zugeschaltet ist und unterbricht daraufhin ihre eigene Einspeisung. Dieses Prinzip findet besonders bei Installationssystemen mit geeigneter Leitungsinfrastruktur Anwendung, insbesondere bei einem Installationssystem mit einem relativ kurzen Leitungsnetz, so dass im gesamten Leitungsnetz eine hinreichend gute Unterscheidung zwischen den Versorgungsspannungen der zentralen Einspeisestelle und der dezentralen Versorgungseinheit möglich ist.

Alternativ zu der Übermittlung eines Abschaltsignals durch die zentrale Einspeisestelle, wird in einer zweiten Ausführungsform das Abschaltsignal bevorzugt über eine spezielle Abschalteinheit an die dezentrale Versorgungseinheit übermittelt. Die Abschalteinheit ist beispielsweise ein Inbetriebnahmegerät, welches vor der Erweiterung des Installationssystems an die Kommunikationsleitung angeschlossen wird. Die Übermittlung des Abschaltsignals erfolgt also vorzugsweise lediglich einmal, so dass die Abschalteeinheit anschließend wieder entfernt werden kann.

Hierzu wird vorzugsweise die über das Abschaltsignal übermittelte Information in der dezentralen Versorgungseinheit insbesondere langfristig gespeichert. Die Speicherung erfolgt zweckdienlicherweise auch bei der Übermittlung des Abschaltsignals von der zentralen Einspeisestelle, so dass ein einmaliges Abschaltsignal ausreichend ist. Damit wird verhindert, dass die Versorgungseinheiten bei Aufall der Einspeisestellen automatisch wieder zuschalten.

Um das Abschaltsignal unterscheidbar von den normalen Kommunikationssignalen zu machen, weist es in einer bevorzugten Ausführung ein zum Kommunikationssignal verschiedenes Modulationsmuster auf. Das Abschaltsignal ist also vorzugsweise auf die bereitgestellte Versorgungsspannung derart aufmoduliert, dass es sich von dem ebenfalls auf die Versorgungsspannung aufmodulierten Kommunikationssignal deutlich unterscheidet. Die beiden Signale sind hierzu beispielsweise im Hinblick auf ihre aufmodulierte Signalfrequenz verschieden. Das aufmodulierte Muster ist dabei derart ausgelegt, dass es von allen dezentralen Versorgungseinheiten trotz deren Dämpfung sicher empfangen wird.

In einer vorteilhaften Ausführung wird das Abschaltsignal vor Inbetriebnahme der zentralen Einspeisestelle übermittelt, so dass die dezentralen Versorgungseinheiten bereits abgeschaltet sind, bevor über die zentrale Einspeisestelle eine entsprechende Versorgungsspannung oder ein Versorgungsstrom eingespeist wird. Damit sind Rückwirkungen der dezentralen Versorgungseinheiten bei Anschluss der zentralen Einspeisestelle vermieden.

Die über das Abschaltsignal ferngesteuerte Abschaltung der dezentralen Versorgungseinheiten erfolgt bevorzugt automatisch, sobald die zentrale Einspeisestelle angeordnet wird. Alternativ hierzu kann die Fernsteuerung auch manuell erfolgen, beispielsweise dadurch, dass die Abschalteinheit manuell betätigt wird.

Gemäß einer dritten Alternative erfolgt die Anpassung der dezentralen Versorgungseinheit an den Versorgungsbedarf der Installationsgeräte vorzugsweise dadurch, dass die Versorgungseinheit insbesondere bei ihrer Inbetriebnahme prüft, ob eine ausreichende Versorgung für die Installationsgeräte gewährleistet ist, und ggf. die eigene dezentrale Versorgung unterbindet.

Gemäß dieser Ausführungsform prüft die Versorgungseinheit selbstständig, ob sie eine Versorgungsspannung oder einen Versorgungsstrom in die Kommunikationsleitung einspeisen muss, um einen sicheren Betrieb des Installationssystems zu gewährleisten. Dies ist insbesondere dann vorteilhaft, wenn in dem Installationssystem mehrere Versorgungseinheiten vorgesehen sind, so dass eine Überversorgung eintritt. Besteht eine Überversorgung, schaltet die Versorgungseinheit die Versorgung ab oder nicht ein. Dadurch wird die Dämpfung durch die Versorgungseinheiten in dem System möglichst gering gehalten. Ist neben den dezentralen Versorgungseinheiten auch eine zentrale Einspeisestelle vorgesehen, so wird die in der Regel ausreichende Versorgung durch die Einspeisestelle von den Versorgungseinheiten erkannt, die sich allesamt abschalten. Falls die zentrale Einspeisestelle keine ausreichende Versorgung bereitstellt, wird sie automatisch durch Zuschaltung einer geeigneten Anzahl von Versorgungseinheiten unterstützt.

Die Überprüfung der Versorgungssituation wird von den Versorgungseinheiten vorzugsweise in zeitlicher Abfolge vorgenommen. Dadurch wird vermieden, dass Fehldiagnosen bei der Prüfung auftreten. Bei gleichzeitiger Prüfung besteht die Gefahr, dass jede Versorgungseinheit eine ausreichende Versorgung feststellt und die eigene Versorgung unterbindet. Dies gefährdet die Versorgungssicherheit.

Die zeitliche Abfolge bei der Überprüfung wird beispielsweise über einen Einstellmechanismus, z. B. über die Definition einer Kommunikationsadresse, an den einzelnen Versorgungseinheiten festgelegt. Alternativ wird die Prüfung über eine Steuerung aktiviert, die hierzu über die Kommunikationsleitung einen entsprechenden, an die jeweilige Versorgungseinheit adressierten, Steuerbefehl übermittelt.

In einer zweckdienlichen Ausgestaltung erfolgt die Prüfung bei einer definierten Belastung des Installationssystems, um die Versorgungssicherheit für alle Betriebszustände zu gewährleisten. Hierzu wird eine entsprechend dimensionierte physikalische Last, also ein geeigneter elektrischer Verbraucher, in das Installationssystem geschaltet. Dabei wird insbesondere überprüft, ob eine ausreichende Versorgungsspannung über die Kommunikationsleitung anliegt. Falls bei der Prüfung unter Last die bereitgestellt Versorgungsspannung zusammenbricht, wird die dezentrale Versorgung zugeschaltet.

Alternativ wird die Belastung des Installationssystem zweckdienlicherweise simuliert. Hierzu wird der von der Versorgungseinheit eingespeiste Versorgungsstrom reduziert.

Gemäß einer vierten Ausführungsform wird die von der Versorgungseinheit bereitgestellte. Versorgung nur kurzfristig unterbrochen oder reduziert, und zwar während ein Busteilnehmer, also eines der Installationsgeräte, einen Sendeimpuls abgibt. Aufgrund der kurzen Zeitspanne des Sendeimpulses wird die Gesamtversorgung der Installationsgeräte nicht beeinträchtigt. Im Zeitraum des Sendeimpulses besteht nämlich kein oder nur ein geringer Versorgungsbedarf.

Durch die Reduzierung der eingespeisten Versorgung, insbesondere des eingespeisten Versorgungsstroms, wird die Last und somit die Dämpfung reduziert. Es wird also der Vorteil erzielt, dass das von dem Sender abgegebene Signal verstärkt wird.

Ausführungsbeispiele der Erfindung werden im folgenden anhand der Figuren näher erläutert. Es zeigen jeweils in schematischen Block-Diagramm-Darstellungen:
- FIG 1: einen Ausschnitt aus einem Installationssystem mit einer zentralen Einspeisestelle,
- FIG 2: einen Ausschnitt aus einem Installationssystem mit einer zentralen Einspeisestelle und zusätzlich mit einer Abschalteinheit,
- FIG 3: eine dezentrale Versorgungseinheit die zur Auswertung eines Abschaltsignals ausgebildet ist,
- FIG 4: eine dezentrale Versorgungseinheit die zur Prüfung einer ausreichenden Versorgung im Installationssystem ausgebildet ist, und
- FIG 5: eine dezentrale Versorgungseinheit die zur Unterbrechung oder Reduzierung ihrer Einspeisung ausgebildet ist, wenn sie einen Sendeimpuls abgibt.

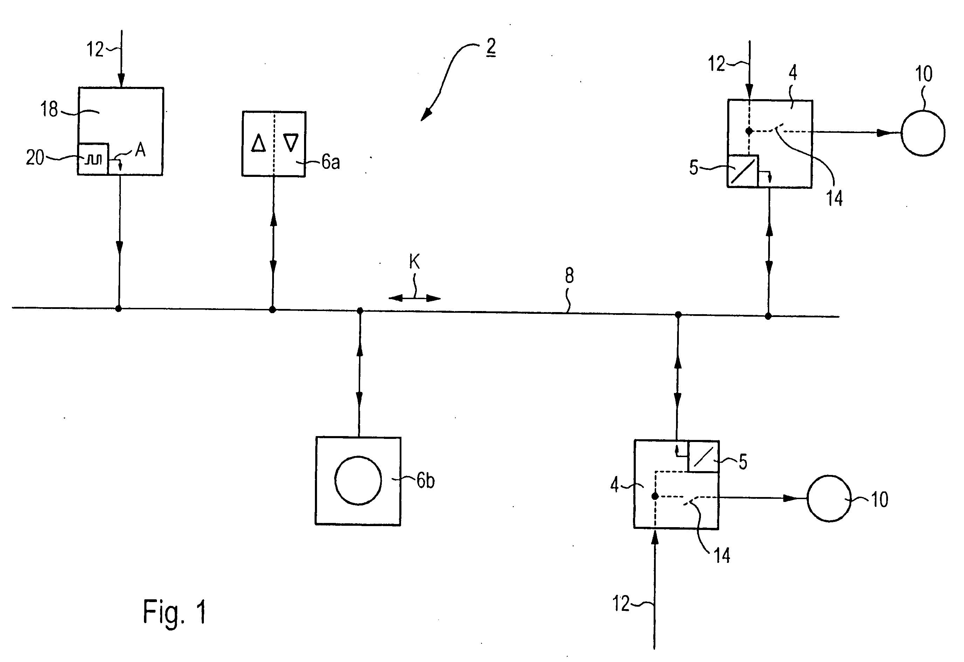

Gemäß FIG 1 umfasst ein Gebäude-Installationssystem 2, eine Anzahl von Installationsgeräten. Diese Installationsgeräte sind Sensoren 6a,6b und Aktoren 4. Letztere sind an eine Versorgungsleitung 12 angeschlossen und weisen im Ausführungsbeispiel jeweils eine dezentrale Versorgungseinheit 5 auf. Prinzipiell können auch die Sensoren 6a,6b Versorgungseinheiten umfassen. In FIG 1 sind jeweils zwei Aktoren 4 und zwei Sensoren 6a,6b dargestellt. Der eine Sensor 6a ist beispielsweise als Schalter ausgebildet, über den wahlweise oder gleichzeitig die beiden Aktoren 4 angesteuert werden. Der zweite Sensor 6b ist beispielsweise als Überwachungsmonitor ausgeführt. Die Sensoren 6a,6b und die Aktoren 4 sind über eine Kommunikationsleitung 8 zum Datenaustausch miteinander verbunden. Die Kommunikationsleitung 8 ist vorzugsweise als eine Datenbus-Leitung ausgeführt. Die Sensoren 6a,6b und die Aktoren 4 senden und empfangen über die Kommunikationsleitung 8 Kommunikationssignale K. Diese sind als Datentelegramm aufgebaut, welches bevorzugt einen Adressierungscode umfasst, aus dem vorzugsweise sowohl der Sender als auch der Adressat des Kommunikationssignals K zu entnehmen sind.

Über die Aktoren 4 werden elektrische Verbraucher 10 angesteuert. Diese sind beispielsweise ein Elektromotor für einen Rolladenantrieb oder ein Beleuchtungsmittel. Die Aktoren 4 verbinden die Verbraucher 10 jeweils über einen Schalter 14 mit der Versorgungsleitung 12.

Über die Versorgungseinheiten 5 wird in geeigneter Weise für die weiteren Installationsgeräte eine elektrische Versorgung über die Kommunikationsleitung 8 bereitgestellt. Über die Kommunikationsleitung 8 werden also zum einen Kommunikationssignale K übertragen, und zum anderen wird über sie eine Spannungs- oder Stromversorgung vorgenommen. Die Versorgungseinheiten 5 sind in dem Installationssystem 2 dezentral angeordnet.

Ein Nachteil der Versorgungseinheiten 5 ist darin zu sehen, dass sie zu einer Dämpfung der über die Kommunikationsleitung 8 gesendeten Kommunikationssignale K beitragen. In der Regel wird dies bei der Auslegung des Installationssystems 2 berücksichtigt. Insbesondere im Hinblick auf eine Erweiterung eines bestehenden Installationssystems 2 treten Probleme auf, da die Anordnung von weiteren dezentralen Versorgungseinheiten 5 zu einer Signaldämpfung führt, die eine sichere Übertragung von Kommunikationssignalen K unter Umständen nicht mehr gewährleistet.

Gemäß FIG 1 ist zur Lösung dieses Problems eine zentrale Einspeisestelle 18 vorgesehen, die vorzugsweise die gesamte busseitige elektrische Versorgung der Installationsgeräte übernimmt. Sie ist an eine Versorgungsleitung 12 angeschlossen und speist in die Kommunikationsleitung 8 einen Versorgungsstrom/eine Versorgungsspannung ein. Die Einspeisestelle 18 weist ein Signalmodul 20 auf, in dem ein Abschaltsignal A erzeugt und in die Kommunikationsleitung 8 eingespeist wird. Das Abschaltsignal A wird von den Versorgungseinheiten 5 der Aktoren 4 empfangen und ausgewertet, woraufhin sie ihre dezentrale Einspeisung abschalten. Damit wird die Dämpfung der Kommunikationssignale K gering gehalten.

Das Abschaltsignal A wird vorzugsweise ebenso wie das Kommunikationssignal K auf die Versorgungsspannung aufmoduliert. Das Modulationsmuster des Abschaltsignals A unterscheidet sich dabei deutlich von dem des Kommunikationssignals K, um einen eindeutige Identifizierung zu ermöglichen. Beispielsweise wird hierzu eine geeignete Frequenz für das Abschaltsignal A ausgewählt. Alternativ hierzu wird das Abschaltsignal A dadurch gebildet, dass die zentrale Einspeisestelle 18 eine höhere Versorgungsspannung bereitstellt als die dezentralen Versorgungseinheiten 5. Diese erkennen aufgrund der höheren Versorgungsspannung in der Kommunikationsleitung 8, dass eine zentrale Einspeisestelle 18 angeschlossen ist.

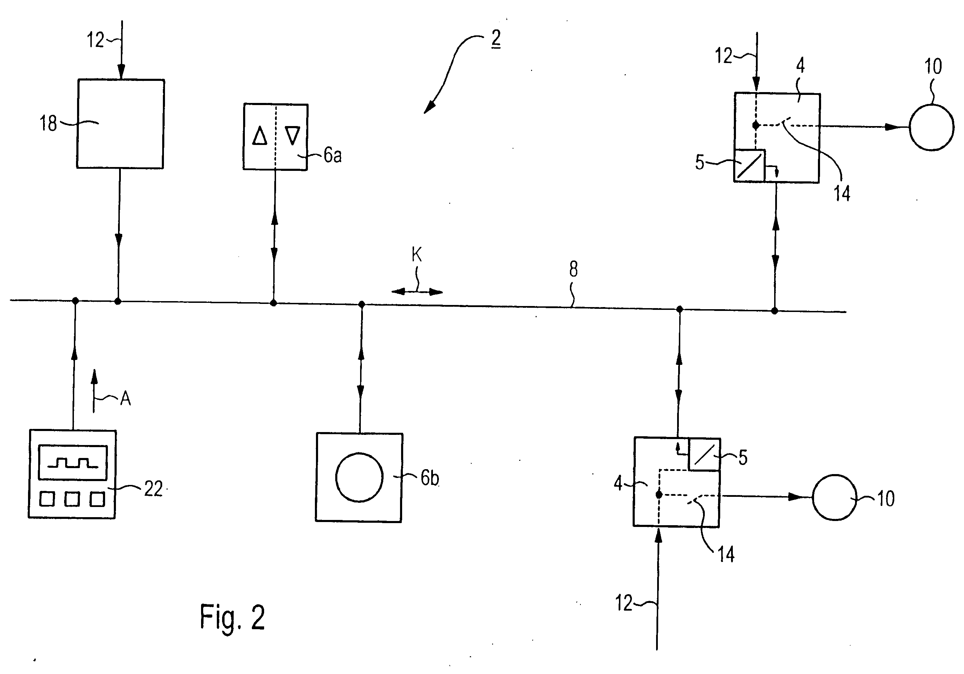

In einer zweiten Ausführungsform, die in FIG 2 dargestellt ist, wird das Abschaltsignal A über eine separate Abschalteinheit 22 in die Kommunikationsleitung 8 eingespeist. Die zentrale Einspeisestelle 18 übernimmt ausschließlich die Funktion der elektrischen Versorgung. Die Abschalteinheit 22 ist beispielsweise ein spezielles Inbetriebnahmegerät, das nur zur Inbetriebnahme des Installationssystems 2 angeschlossen und anschließend wieder entfernt wird. Vor Erweiterung des Installationssystems 2 wird von der Abschalteinheit 22 ein Abschaltsignal A gesendet. Das Abschaltsignal A wird also lediglich einmal an die dezentralen Versorgungseinheiten 5 übermittelt, die daraufhin jeweils ihre dezentrale Versorgung komplett abschalten.

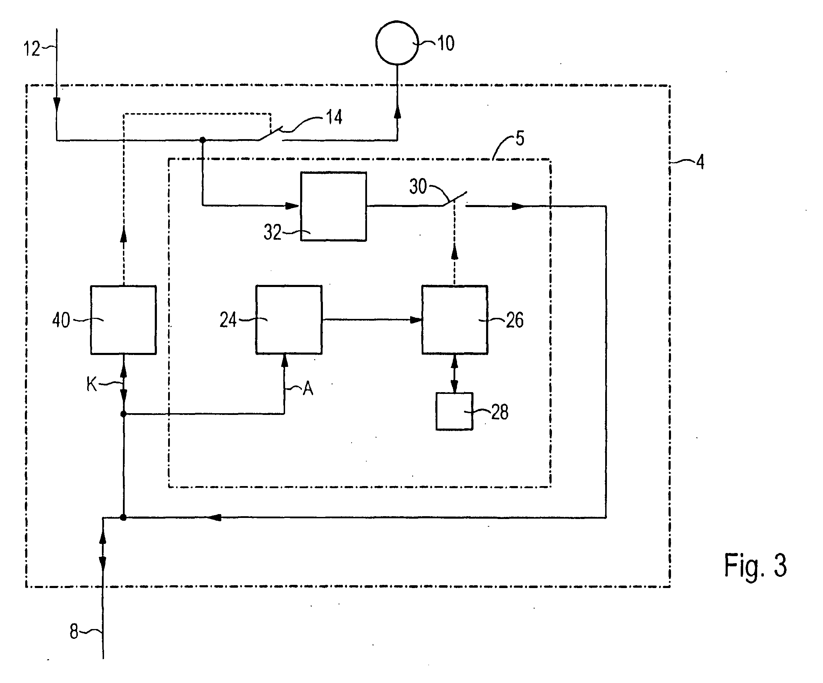

In den Figuren 3 bis 5 ist die Versorgungseinheit 5 als Teil des Aktors 4 gestrichelt dargestellt und umfasst jeweils unterschiedliche Komponenten. Zur Erfassung und Auswertung des Abschaltsignals A umfasst die dezentrale Versorgungseinheit 5 nach FIG 3 ein Auswertemodul 24, eine Verarbeitungseinheit, beispielsweise einen Mikrokontroller 26, und einen Speicher 28 sowie eine Schalteinheit 30 und ein Aufbereitungsmodul 32. Das Auswertemodul 24 steht mit der Kommunikationsleitung 8 in Verbindung. Wird über diese das Abschaltsignal A übermittelt, so wird dies von dem Auswertemodul 24 erkannt und als entsprechendes Signal an den Mikrokontroller 26 weitergeleitet. Dieser wirkt auf die Schalteinheit 30, über die die Einspeisung der elektrischen Versorgung in die Kommunikationsleitung 8 unterbrochen wird. Die durch das Abschaltsignal A übermittelte Abschaltinformation wird in einem dem Mikrokontroller 26 zugeordneten Speicher 28 insbesondere permanent abgespeichert, um dauernd sicherzustellen, dass keine dezentrale Einspeisung erfolgt.

Zur elektrischen Versorgung wird die über die Versorgungsleitung 12 der dezentralen Versorgungseinheit 4 bereitgestellte Spannung oder der bereitgestellt Strom durch das Aufbereitungsmodul 32 für die Einspeisung in die Kommunikationsleitung 8 entsprechend aufbereitet. Das Aufbereitungsmodul 32 ist hierzu beispielsweise als Spannungsquelle mit Strombegrenzung ausgebildet.

Neben der Versorgungseinheit 5 umfasst der Aktor 4 ein Sende/Empfangsmodul 40 (Transceiver), das zum Empfang und zur Auswertung sowie zum Senden eines Kommunikationssignals K ausgebildet ist. In Abhängigkeit des Kommunikationssignales K wirkt das Sende/Empfangsmodul 40 auf den Schalter 14 ein, der ein Zu- bzw. Abschalten des elektrischen Verbrauchers 10 bewirkt.

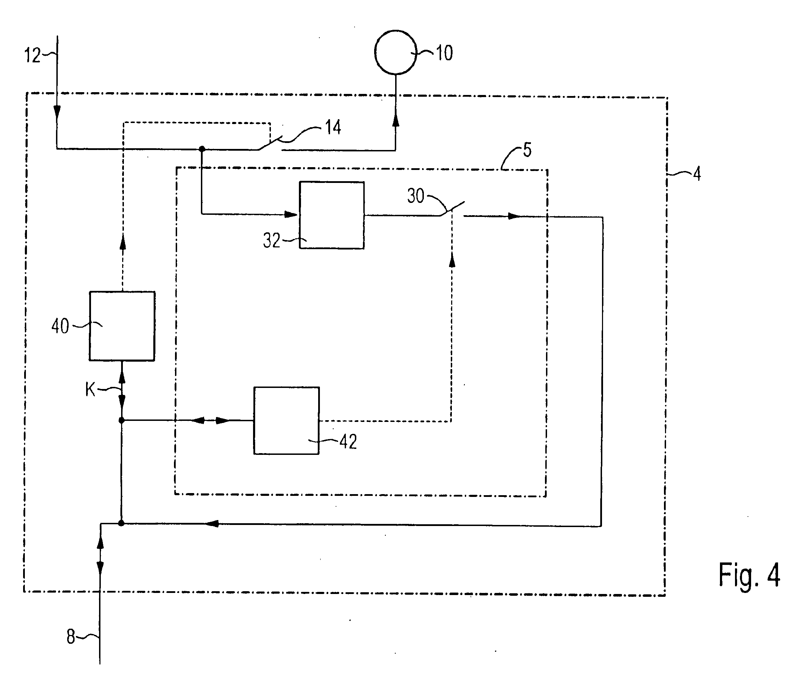

Bei einer dritten Ausführungsform ist die dezentrale Versorgungseinheit 5 gemäß FIG 4 ausgebildet. Sie unterscheidet sich von der Ausführung nach FIG 3 dadurch, dass sie lediglich das Aufbereitungsmodul 32, die Schalteinheit 30 sowie einen Prüfbaustein 42 umfasst. Über letzteren wird die Schalteinheit 30 betätigt. Er ist beispielsweise als Mikrokontroller mit A/D-Converter ausgebildet. Der Prüfbaustein 42 überprüft, ob für das Installationssystem 2 über die Kommunikationsleitung 8 eine ausreichende elektrische Versorgung bereitgestellt wird. Hierzu wird eine Spannungsprüfung durchgeführt. Um zu verhindern, dass beispielsweise beim Zuschalten einer Last die Versorgungsspannung zusammenbricht, wird bei der Prüfung entweder eine physikalische Last in Form eines Verbrauchers zugeschaltet oder eine solche Last wird in geeigneter Weise simuliert. Zur Simulation wird bevorzugt der von der dezentralen Versorgungseinheit 5 bereitgestellte Versorgungsstrom reduziert. Hierzu ist der Prüfbaustein 42 mit dem Aufbereitungsmodul 32 verbunden, über das die Höhe der Stromversorgung einstellbar ist.

Wird von dem Prüfbaustein 42 eine ausreichende elektrische Versorgung in der Kommunikationsleitung 8 festgestellt, so wird die dezentrale Versorgung abgeschaltet bzw. nicht eingeschaltet.

Bei dieser dritten Ausführungsform ist im Unterschied zu den beiden Ausführungsformen gemäß FIG 1 und FIG 2 nicht unbedingt eine zentrale Einspeisestelle 18 vorgesehen. Diese dritte Ausführungsform eignet sich, um die erlaubte Anzahl der dezentralen Versorgungseinheiten 5 zu maximieren, und damit die durch die Versorgungseinheiten 5 bedingte Dämpfung der Kommunikationssignale K so gering wie möglich zu halten.

Sind mehrere dezentrale Versorgungseinheiten 5 in dem Installationssystem 2 angeordnet, so erfolgt die Prüfung sukzessive, d. h. die Versorgungseinheiten 5 prüfen nacheinander, ob eine ausreichende elektrische Versorgung über die Kommunikationsleitung 8 bereitgestellt ist. Die Reihenfolge der Prüfung wird an den dezentralen Versorgungseinheiten 5 durch einen Einstellmechanismus, beispielsweise durch ein Einstellrädchen, festgelegt. Alternativ wird die Prüfung durch einen über die Kommunikationsleitung 8 bereitgestellten Steuerbefehl ausgelöst. Die Steuerbefehle für die verschiedenen Versorgungseinheiten 4 werden in zeitlicher Abfolge von einer nicht dargestellten Steuereinheit eingespeist.

Die ersten drei Ausfuhrungsformen haben gemein, dass die bereitgestellte elektrisch Versorgung für die Installationsgeräte durch ein Abschalten der dezentralen Versorgungseinheiten 5 an den Versorgungsbedarf der Installationsgeräte angepasst wird. Die Anpassung kann als statisch angesehen werden, d. h. solange das Installationssystem 2 in Betrieb ist wird die Abschaltung nur einmal vorgenommen.

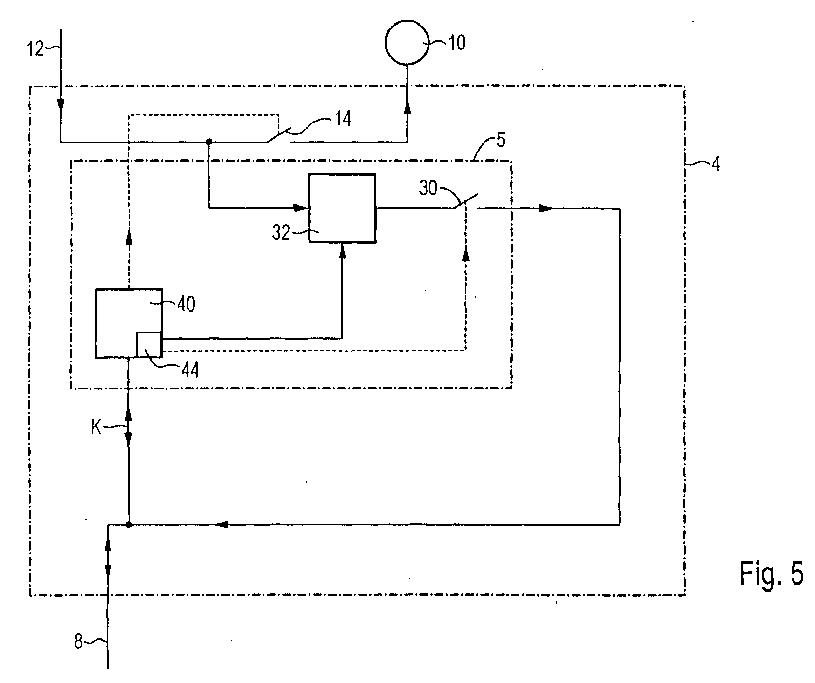

Gemäß einer vierten Ausführungsform ist ein dynamisches Abschalten oder Reduzieren der elektrischen Versorgung vorgesehen. Hierbei ist die dezentrale Versorgungseinheit 5 gemäß FIG 5 ausgebildet und schaltet die elektrische Versorgung nur für den Zeitraum ab, in dem sie einen Sendeimpuls auf der Kommunikationsleitung 8 erkennt. Aufgrund dieser Maßnahme wird die durch die Versorgungseinheit 5 bedingte Dämpfung 4 deutlich reduziert. Der Sendeimpuls kann dabei von dem Aktor 4, in dem die Versorgungseinheit 5 integriert ist, abgegeben werden, oder von einem weiteren Busteilnehmer (Installationsgerät) .

Um zu erkennen, ob ein Sendeimpuls vorliegt, weist das Sende/Empfangsmodul 40 der Versorgungseinheit 5 eine schnelle Auswerteeinheit 44 auf. Sobald diese einen Sendeimpuls als solchen erkennt, beispielsweise anhand der Kriterien Pulshöhe und Pulsdauer, gibt sie ein entsprechendes Signal an das Aufbereitungsmodul 32 oder an die Schalteinheit 30 ab. Daraufhin wird der eingespeiste Versorgungsstrom reduziert oder abgeschaltet. In diesem Moment erfolgt daher aufgrund der Verringerung der Dämpfung eine Signalverstärkung.

Alternativ zu der Pulserkennung überprüft die Auswerteeinheit 44 fortlaufend die Signalhöhe des Sendesignals. In Abhängigkeit der Signalhöhe steuert oder regelt die Auswerteeinheit 44 die Höhe des Versorgungsstroms.

Die Auswerteeinheit 44 beeinflusst also maßgebend die Einspeisung. Da sie ein Teil des Sende/Empfangsmoduls 40 ist, umfasst gemäß FIG 5 die Versorgungseinheit 5 neben dem Aufbereitungsmodul 32 und der Schalteinheit 30 auch das Sende/Empfangsmodul 40.

Die unterschiedlichen Ausführungen der dezentralen Versorgungseinheit 5 gemäß den Figuren 3 bis 5 werden vorzugsweise in einer Standard-Versorgungseinheit 5 integriert, so dass ein solches Standardgerät flexibel für die unterschiedlichen Ausführungsformen im Hinblick auf die Reduzierung der dezentralen Versorgung eingesetzt werden kann. Da die Ausführungsformen sich gegenseitig nicht ausschließen, sind sie miteinander auch kombinierbar. Beispielsweise wird anstatt der kompletten Abschaltung der dezentralen Versorgungseinheiten 5 lediglich eine Reduzierung ihrer Einspeisung vorgenommen.

Allen Ausführungsbeispielen ist gemeinsam, dass sie durch ein Abschalten bzw. ein Reduzieren der dezentralen Einspeisung die durch die dezentrale Einspeisung bedingte Dämpfung der Kommunikationssignale K verringern. Die Reduzierung erfolgt hierbei bedienerfreundlich automatisch und/oder ferngesteuert.

## Patentansprüche

1. Verfahren zum Betreiben eines Gebäude-Installationssystems (2), bei dem eine Anzahl von Installationsgeräten (4,6a,6b) über eine Kommunikationsleitung (8) mittels Kommunikationssignalen (K) miteinander kommunizieren, bei dem eines der Installationsgeräte (4,6a,6b) für eine elektrische Versorgung eines weiteren Installationsgeräts (4,6a,6b) eine dezentrale Versorgungseinheit (5) aufweist, die hierzu an die Kommunikationsleitung (8) zur Einspeisung der elektrischen Versorgung angeschlossen ist, und bei dem die Versorgung automatisch oder ferngesteuert zur Verringerung einer durch die Versorgungseinheit (5) bedingten Dämpfung der Kommunikationssignale (K) reduziert oder abgeschaltet wird.

2. Verfahren nach Anspruch 1, bei dem eine zentrale Einspeisestelle (18) eine zentrale Versorgung bereitstellt.

3. Verfahren nach Anspruch 2, bei dem die zentrale Einspeisestelle (18) an die dezentrale Versorgungseinheit (5) ein Abschaltsignal (A) übermittelt

4. Verfahren nach Anspruch 3, bei dem als Abschaltsignal (A) von der zentralen Einspeisestelle (18) eine höhere Versorgungsspannung als von der dezentralen Versorgungseinheit (5) bereitgestellt wird.

5. Verfahren nach Anspruch 2, bei dem eine Abschalteinheit (22) ein Abschaltsignal (A) an an die dezentrale Versorgungseinheit (5) übermittelt.

6. Verfahren nach einem der Ansprüch 3 bis 5, bei dem das Abschaltsignal (A) ein Modulationsmuster aufweist, das von dem eines Kommunikationsignals (K) verschieden ist.

7. Verfahren nach einem der Ansprüche 3 bis 6, bei dem die mittels des Abschaltsignals (A) übermittelte Information in der dezentralen Versorgungseinheit (5) gespeichert wird.

8. Verfahren nach einem der Ansprüche 3 bis 7, bei dem das Abschaltsignal (A) vor Inbetriebnahme der zentralen Einspeisestelle (18) übermittelt wird.

9. Verfahren nach einem der vorhergehenden Ansprüche, bei dem die dezentrale Versorgungseinheit (5) prüft, ob eine ausreichende Versorgung für die Installationsgeräte (4,6a,6b) gewährleistet ist, und gegebenenfalls die eigene dezentrale Versorgung unterbindet.

10. Verfahren nach Anspruch 9, bei dem mehrere dezentrale Versorgungseinheiten (5) in zeitlicher Abfolge nacheinander prüfen, ob eine ausreichende Versorgung gewährleistet ist.

11. Verfahren nach Anspruch 9 oder 10, bei dem die Prüfung bei einer Belastung des Installationssystems (2) durchgeführt wird.

12. Verfahren nach Anspruch 9 oder 10, bei dem zur Prüfung eine Belastung des Installationssystems (2) simuliert wird.

13. Verfahren nach einem der vorhergehenden Ansprüche, bei dem die dezentrale Versorgungseinheit (5) ihre Einspeisung unterbricht oder reduziert, wenn sie einen Sendeimpuls auf der Kommunikationsleitung (8) erkennt.

## Claims

1. Method for operating a building installation system (2), in which a number of installation devices (4, 6a, 6b) communicate with one another by way of a communication line (8) using communication signals, in which one of the installation devices (4, 6a, 6b) has a decentralized supply unit (5) for supplying electrical energy to an additional installation device (4, 6a, 6b), said decentralized supply unit (5) being connected for this purpose to the communication line (8) for feeding the electrical supply and in which the supply is reduced or switched off in an automatic or remote-controlled manner in order to reduce an attenuation of the communication signals (K) due to the supply unit (5).

2. Method according to claim 1, in which a central feeder point (18) provides a central supply.

3. Method according to claim 2, in which the central feeder point (18) transmits a disabling signal (18) to the decentralized supply unit (5).

4. Method according to claim 3, in which a higher supply voltage is provided as the disabling signal (A) by the central feeder point (18) than is provided by the decentralized supply unit (5).

5. Method according to claim 2, in which a disabling unit (22) transmits a disabling signal (A) to the decentralized supply unit (5).

6. Method according to one of claims 3 to 5, in which the disabling signal (A) has a modulation pattern which differs from that of a communication signal (K).

7. Method according to one of claims 3 to 6, in which the information transmitted by means of the disabling signal (A) is stored in the decentralized supply unit (5).

8. Method according to one of claims 3 to 7, in which the disabling signal (A) is transmitted prior to the start-up of the central feeder point (18).

9. Method according to one of the preceding claims, in which the decentralized supply unit (5) checks whether an adequate supply is ensured for the installation devices (4, 6a, 6b) and if necessary inhibits the intrinsic decentralized supply.

10. Method according to claim 9, in which several decentralized supply units (5) examine consecutively one after the other whether an adequate supply is ensured.

11. Method according to claim 9 or 10, in which the examination is carried out when the installation system (2) is on load.

12. Method according to claim 9 or 10, in which a loading of the installation system (2) is simulated for examination purposes.

13. Method according to one of the preceding claims, in which the decentralized supply unit (5) interrupts or reduces its feed if it identifies an initial pulse on the communication line (8).

## Revendications

1. Procédé pour le fonctionnement d'un système d'installation de bâtiment (2), dans lequel un nombre d'appareils d'installation (4, 6a, 6b) communiquent les uns avec les autres par le biais d'une ligne de communication (8) au moyen de signaux de communication (K), par lequel l'un des appareils d'installation (4, 6a, 6b) présente pour une alimentation électrique d'un autre appareil d'installation (4, 6a, 6b) une unité d'alimentation (5) décentralisée, qui est raccordée à cet effet à la ligne de communication (8) pour l'injection de l'alimentation électrique, et dans lequel l'alimentation est réduite ou déconnectée automatiquement ou de façon télécommandée pour la réduction d'un amortissement, dû à l'unité d'alimentation (5), des signaux de communication (K).

2. Procédé selon la revendication 1, dans lequel un point d'injection (18) central met à disposition une alimentation centrale.

3. Procédé selon la revendication 2, dans lequel le point d'injection (18) central transmet un signal de déconnexion (A) à l'unité d'alimentation (5) décentralisée.

4. Procédé selon la revendication 3, dans lequel, comme signal de déconnexion (A), le point d'injection (18) central met à disposition une tension d'alimentation supérieure à celle fournie par l'unité d'alimentation (5) décentralisée.

5. Procédé selon la revendication 2, dans lequel une unité de déconnexion (22) transmet un signal de déconnexion (A) à l'unité d'alimentation (5) décentralisée.

6. Procédé selon l'une quelconque des revendications 3 à 5, dans lequel le signal de déconnexion (A) présente un modèle de modulation qui est différent de celui d'un signal de communication (K).

7. Procédé selon l'une quelconque des revendications 3 à 6, dans lequel l'information transmise au moyen du signal de déconnexion (A) est stockée dans l'unité d'alimentation (5) décentralisée.

8. Procédé selon l'une quelconque des revendications 3 à 7, dans lequel le signal de déconnexion (A) est transmis avant la mise en service du point d'injection (18) central.

9. Procédé selon l'une quelconque des revendications précédentes, dans lequel l'unité d'alimentation (5) décentralisée vérifie si une alimentation suffisante est garantie pour les appareils d'installation (4, 6a, 6b) et supprime le cas échéant l'alimentation décentralisée propre.

10. Procédé selon la revendication 9, dans lequel plusieurs unités d'alimentation (5) décentralisées vérifient de façon successive les unes après les autres si une alimentation suffisante est garantie.

11. Procédé selon la revendication 9 ou 10, dans lequel le test est effectué dans le cas d'une sollicitation du système d'installation (2).

12. Procédé selon la revendication 9 ou 10, dans lequel une sollicitation du système d'installation (2) est simulée pour le test.

13. Procédé selon l'une quelconque des revendications précédentes, dans lequel l'unité d'alimentation (5) décentralisée interrompt ou réduit son injection lorsqu'elle détecte une impulsion d'émission sur la ligne de communication (8).
